# EUROPEAN PATENT APPLICATION

(11) **EP 1 645 780 A2**
(43) Date of publication of application: **12.04.2006**
(21) Application number: 05255792.3
(22) Date of filing: 20.09.2005
(51) Int. Cl.: F16H 25/24, F16H 25/22

(54) **Screw Actuator**

(30) Priority: 06.10.2004 GB 0422134
(71) Applicant: Goodrich Actuation Systems Ltd., Solihull West Midlands B90 4LA (GB)
(72) Inventor: Sandells, David Owen, Birmingham B3 1RW (GB)
(74) Representative: Bailey, Richard Alan

(57) **Abstract**

A screw actuator comprises a sleeve (10) encircling part of an actuator shaft (12), one of the sleeve (10) and the actuator shaft (12) being rotatable, a drive arrangement (24) for rotating the rotatable one of the sleeve (10) and the actuator shaft (12), and a friction brake arrangement (26) for applying a braking load to the said rotatable one of the sleeve (10) and the actuator shaft (12) to resist rotation thereof, wherein the drive arrangement is adapted to adjust the axial position of the said rotatable one of the sleeve (10) and the actuator shaft (12) to disengage the friction brake arrangement (26) when the said rotatable one of the sleeve (10) and the actuator shaft (12) is being rotated by the drive arrangement (24).

## Description

This invention relates to a screw actuator, and in particular to a screw actuator suitable for use on an aircraft.

Screw actuators ofthe ball screw or Acme screw type are commonly used on aircraft to drive, for example, flight control surfaces, wing mounted flaps, doors or thrust reverser components or other displaceable components between retracted or closed and extended or open configurations. One type of actuator includes a nut arranged to be rotated, whilst remaining axially fixed, the nut having an internal screw thread-like formation, and an output shaft which is axially moveable whilst being held against rotary movement, the output shaft being formed with an external screw thread-like formation. A plurality of spherical members are located within the thread-like formations to provide a coupling between the nut and the output shaft such that as the nut is rotated the shaft moves axially.

Another type of actuator includes a nut which is held against rotation and which is coupled in a manner similar to that described above to a rotatable shaft. The shaft is held against significant axial movement by suitable bearings such that, in use, rotary motion of the shaft causes translation of the nut.

Actuators of this type allow rotary motion to be converted to linear motion with low frictional losses.

Where the actuator is used to drive flight control surfaces, flaps, doors or thrust reverser components or other displaceable components to a deployed position, it is desirable to be able to ensure that the flaps, doors or thrust reverser components or other displaceable components are held in their deployed conditions. However, when deployed, considerable external forces are applied to these components, and the low frictional losses in the actuator increase the risk of the actuator being driven out of position, by the external forces applied to the flight control surfaces, flaps or thrust reverser components or other displaceable components. In order to prevent this it is known to provide so-called no-back devices.

One form of no-back device suitable for use in an actuator of the type in which the actuator shaft translates, in use, includes a ratchet mechanism having a ratchet ring moveable, through a friction coupling, with the nut such that rotation of the nut and ratchet ring in one direction by a drive motor is substantially free, rotation of the nut in the opposite direction requiring relative movement between the nut and the ratchet ring, as the ratchet mechanism prevents rotation of the ratchet ring, and hence being against the friction of the friction coupling. Such a device can therefore be used to provide a low friction conversion of rotary motion to linear motion to drive a flight control surface, flap, door or thrust reverser component or other displaceable component in one direction, and to provide a brake to resist reverse movement. When reverse movement is required, for example to return the component to its stowed or non-deployed configuration, this is achieved by using the drive motor to drive the nut against the frictional load applied by the friction coupling. However, this has the disadvantage of generating heat in the actuator and that the friction coupling wears and so requires replacement at relatively short intervals. A relatively high power motor must be used to overcome the resistance to movement in the reverse direction applied by the friction coupling.

Depending upon the application in which the actuators are used, situations can occur where external forces result in the application of an assisting load, assisting deployment. In such situations it is sometimes desirable to be able to apply a braking load to resist the effect of such external forces to prevent damage to the actuator or associated components or to prevent movement beyond a desired position or at a greater rate of movement than desired.

An object of the invention is to provide an actuator capable of achieving these effects.

According to the present invention there is provided a screw actuator comprising a sleeve encircling part of an actuator shaft, one of the sleeve and the actuator shaft being rotatable, a drive arrangement for rotating the rotatable one of the sleeve and the actuator shaft, and a friction brake arrangement for applying a braking load to the said rotatable one of the sleeve and the shaft to resist rotation thereof, wherein the drive arrangement is adapted to adjust the axial position of the said rotatable one of the sleeve and the actuator shaft to disengage the friction brake arrangement when the said rotatable one of the sleeve and the actuator shaft is being rotated by the drive arrangement.

The rotatable one of the sleeve and the actuator shaft will be referred to hereafter as the rotatable component.

Conveniently the friction brake arrangement comprises a first brake disc arranged to resist rotary movement of the rotatable component when the rotatable component occupies a first axial position, and a second brake disc arranged to resist rotary movement ofthe rotatable component when the rotatable component occupies a second axial position, the drive arrangement being arranged to hold the rotatable component in an intermediate axial position between the first and second axial positions when the rotatable component is being rotated by the drive arrangement.

The drive arrangement conveniently includes an input component engageable with a first abutment associated with the rotatable component, an output component arranged to be driven by the input component and engageable with a second abutment associated with the rotatable component, the axial positions of the input and output components being adjustable. Preferably, when the drive arrangement is used to drive the rotatable component, the input and output components are urged apart to engage the first and second abutments and hold the rotatable component in its intermediate axial position.

The input and output components are conveniently provided with pockets defining ramped surfaces, drive transmitting components, for example in the form of balls or rollers, being located between the input and output components in the pockets to transmit drive from the input component to the output component and to ride up the ramped surfaces to urge the input and output components apart when such drive is being transmitted.

Another possibility is to provide the input and output components with pockets, and to provide a series of levers, each lever having one end engaging in a pocket of the input component and another end engaging in a pocket of the output component, the levers forcing the input and output components axially apart in the event of relative angular movement occurring therebetween.

The invention will further be described, by way of example, with reference to the accompanying drawings, in which:
Figure 1 is a diagrammatic sectional view illustrating part of a ball screw actuator in accordance with an embodiment of the invention, in one operative condition;
Figures 2 and 3 are views similar to Figure 1 illustrating the actuator in other conditions;
Figure 4 is a diagrammatic representation of a modification to the arrangement of Figures 1 to 3;
Figures 5 and 6 are representations illustrating another modification; and
Figure 7 is a view similar to Figure 1 illustrating an alternative embodiment.

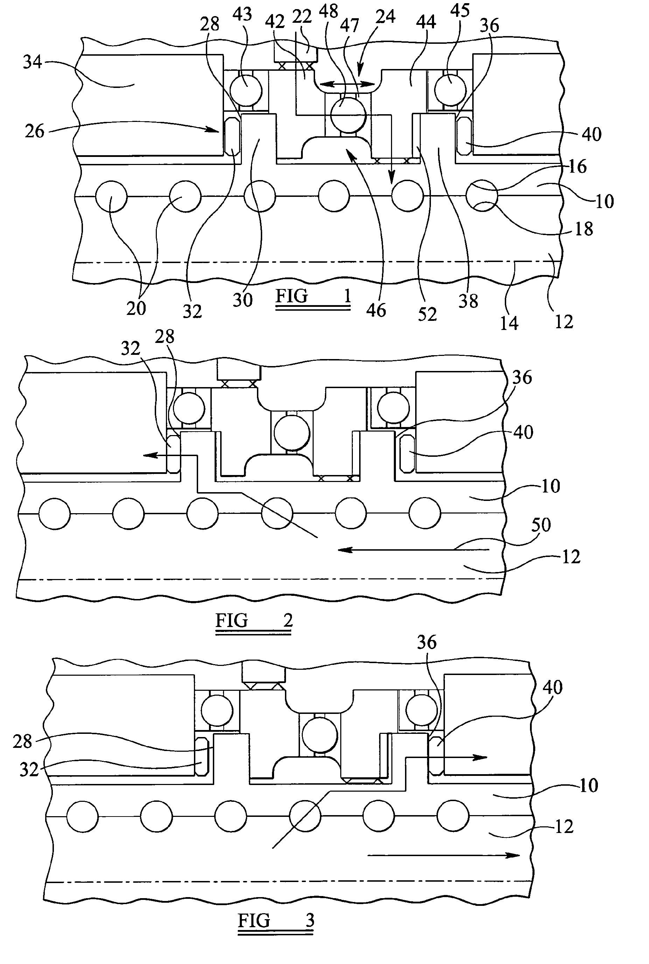

Referring to Figures 1 to 3 there is shown, in diagrammatic form, part of a ball screw actuator comprising a sleeve 10 of generally cylindrical form surrounding part of an output actuator shaft 12. The sleeve 10 is free to rotate about the axis 14 ofthe shaft 12. The shaft 12 is held against rotary movement, but is permitted to move axially. Both the sleeve 10 and the shaft 12 are formed with helical thread-like grooves 16, 18 in which a series of spherical members 20 are located with the result that as the sleeve 10 is rotated whilst being held against significant axial movement, the output shaft 12 moves axially, the direction of axial movement of the shaft 12 being dependent upon the direction of rotary movement of the sleeve 10.

The actuator further includes a motor (not shown) arranged to drive a drive member 22 of annular form for rotation about the axis 14. The drive member 22 is provided, on its inner surface, with a series ofteeth arranged to co-operate with similar formations provided on the exterior of part of a drive arrangement 24, the drive arrangement 24 similarly being keyed to the sleeve 10 such that as the motor operates, the sleeve 10 is driven for rotation about the axis 14.

A brake arrangement 26 is provided to allow braking of the movement of the sleeve 10 such that rotary movement of the sleeve 10 is resisted when the motor is not being operated to drive the sleeve 10 for rotation and an external force is applied to the shaft 12. The brake arrangement 26 comprises a first brake surface 28 formed on a first abutment 30 of annular form projecting from the outer periphery of the sleeve 10, the first brake surface 28 being engageable with a first brake disc 32 or other element carried by a stationary part 34 ofthe actuator. The brake arrangement 26 further comprises a second brake surface 36 defined by part of a second abutment 38 of annular form projecting from the periphery of the sleeve 10, the second brake surface 36 being engageable with a second brake disc 40 or other element carried by an associated stationary part of the actuator.

The drive arrangement 24 comprises an input drive component 42 in the form of an annular ring, the outer periphery of which is provided with formations arranged to mesh with the teeth formed on the drive member 22, and an output component 44, also in the form of an annular ring. The output component 44 is provided on its inner periphery with formations arranged to key with the sleeve 10 as mentioned hereinbefore. The input and output components 42, 44 are located, axially, between the first and second abutments 30, 38, the axial spacing of the input and output components 42, 44 being variable. Bearings 43, 45 are provided to rotatably support the input and output components 42, 44. The bearings 43, 45 may be spring loaded to accommodate axial movement of the input and output components 42, 44, in use.

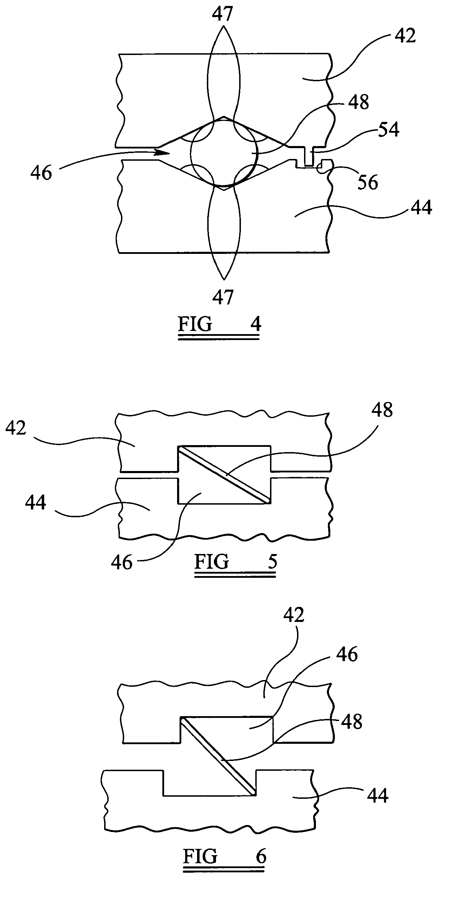

The surfaces ofthe input and output components 42, 44 which face one another are shaped to define a series ofpockets 46. Each pocket 46 defines ramped surfaces 47. Within each pocket 46 is located a drive member 48 in the form of a spherical element. A cage or the like may be provided to house the drive members 48. The shaping ofthe pockets 46 and ramped surfaces 47 is such that, when the motor is not operating and so no drive is to be transmitted through the drive arrangement 24 to the sleeve 10, the drive members 48 sit substantially centrally within the pockets 46 thereby allowing the input and output components 42, 44 to be located relatively close to one another. In this condition, one or other or both of the input and output components 42, 44 is spaced from the associated one of the abutments 30, 38. In the event of an axial load being applied to the output shaft 12, the output shaft 12 and sleeve 10 can move axially by a small distance to bring one or other of the brake surfaces 28, 36 into engagement with the corresponding one of the brake discs 32, 40 to apply a braking load to the sleeve 10 to resist rotation of the sleeve 10. It will be appreciated, therefore, that the application of an external loading to the output shaft 12 does not result in significant rotational movement of the sleeve 10 and so significant axial movement of the output shaft 12 in either direction is resisted. Figure 2 illustrates the application of a compressive external load to the shaft 12 as indicated by arrow 50, the effect of which is to shift the shaft 12 and sleeve 10 to the left, in the orientation illustrated, by a small distance to a first axial position in which the first brake surface 28 is in engagement with the first brake disc 32 to resist rotational movement of the sleeve 10. Figure 3 illustrates the effect of an external load acting in the opposite direction which causes the sleeve 10 to move to a second axial position in which the second brake surface 36 engages the second brake disc 40, again resulting in rotational movement of the sleeve 10 being resisted.

When it is desired to adjust the axial position occupied by the shaft 12, the motor is operated to drive the drive member 22 for rotation. Such movement initially causes a small amount of relative angular movement to occur between the input and output components 42, 44, such movement causing the drive members 48 to ride up the ramped surfaces 47 at the ends of the pockets 46, thereby forcing the input and output components 42, 44 axially away from one another and into engagement with the abutments 30, 38. The design of the actuator is such that, in these circumstances, the sleeve 10 is held at an intermediate axial position in which both of the brake surfaces 28, 36 are spaced from the respective brake discs 32, 40 and thus the brake arrangement 26 does not apply a braking force to the sleeve 10. Continued operation of the motor to drive the shaft 12 either inwardly or outwardly is not, therefore, against the application of a braking load applied by the brake arrangement 26. As a result, wear of the brake arrangement 26 is reduced compared to conventional arrangements and the size of the motor required to operate the actuator is reduced compared to conventional arrangements as it does not need to be of sufficient power to overcome the operation of the brake arrangement 26. The benefits of using a ball screw actuator to convert rotary motion to linear motion with low frictional losses are maintained.

Where operation of the actuator is against an opposing external load, the input drive does not need to act against a braking load applied by a no-back arrangement, once the input drive has moved the input and output components 42, 44 apart. Where operation of the actuator is aided by an assisting load, provided the input drive is sufficient initially to separate the input and output components 42, 44 to allow movement to commence, the assisting load can be used, in a controlled manner, to move the actuator shaft 12. The magnitude of the torque which must be applied to operate the actuator can be reduced compared to conventional arrangements.

In the arrangement illustrated, shims 52 are used to control the maximum permitted separation of the input and output components 42, 44 to prevent damage to the bearings 43, 45 due to the application of excessively large forces thereto.

Although the arrangement described hereinbefore makes use of spherical drive members 48 located within pockets 46 having ramped surfaces 47, it will be appreciated that other types of drive arrangement may be used to force the input and output components 42, 44 away from one another when drive is to be applied to the sleeve 10, and to allow the input and output components 42, 44 to move towards one another when such drive is not taking place. For example, the input and output components 42, 44 may include ramped surfaces which directly abut one another. A further possibility is to replace the spherical drive member 48 with rollers or the like.

Figure 4 illustrates a slight modification to the arrangement described hereinbefore in which the input and output components 42, 44 are provided with inter-engaging stop features 54, 56 adapted to limit the range of permitted relative angular movement between the input and output components 42, 44 thereby limiting the distance by which these components may be forced apart from one another. It is thought that by providing such features, the loadings experienced by the bearings 43, 45 used to support the input and output components 42, 44 may be reduced, thereby increasing the working life of these components.

Figures 5 and 6 illustrate an alternative to the use of spherical drive members 48 in combination with ramped surfaces 47 to force the input and output components 42, 44 apart, in use. In the arrangement of Figures 5 and 6 the pockets 46 are of square sided form and the drive members 48 take the form of levers engaging in opposing corners of the pockets 46 such that relative angular movement between the input and output components 42, 44 results in the drive members 48 forcing the input and output components 42, 44 apart as shown in Figure 6. It is envisaged to provide a series of pockets 46 and associated drive members 48, and to alternate the inclination of the drive members 48 so that relative angular movement of the input and output components 42, 44 in either direction from the position shown in Figure 5 results in the input and output components 42, 44 being forced apart.

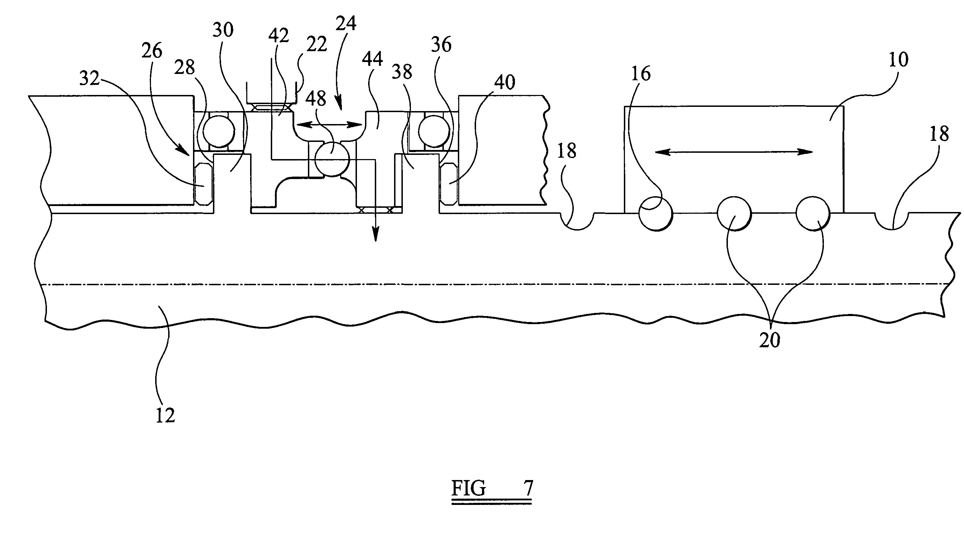

Figure 7 illustrates an alternative embodiment of the invention. In Figure 7, the same reference numerals as those used in Figure 1 are used to denote like or similar parts. The actuator of Figure 7 differs from that of Figure 1 in that it is a translating nut-type actuator, that is to say an actuator of the type in which the sleeve 10 is held against rotation, and is coupled to a rotatable shaft 12 by spherical members 20 located within helical thread-like grooves 16, 18, the shaft 12 being supported by suitable bearings to allow rotation thereof but to restrict axial movement of the shaft 12. In such an arrangement, rotation of the shaft 12 causes the sleeve 10 to translate.

The actuator is provided with a drive arrangement 24 and brake arrangement 26 similar to those of the arrangement of Figure 1, but arranged to drive and apply a braking load to the shaft 12 rather than to the sleeve 10. This is achieved by forming the abutments 30, 38 and associated brake surfaces 28,36 on, or associating them with, the shaft 12 rather than the sleeve 10, and by keying the output component 44 to the shaft 12 rather than the sleeve 10.

In use, when the actuator is not being driven by the motor, in the event of an external load being applied, the load is transmitted through the sleeve 10 to the shaft 12. As drive is not being applied by the motor, the abutments 30, 38 are not held centrally between the brake discs 32, 40. The external load is thus able to bring one or other ofthe brake surfaces 28, 36 into engagement with the associated brake disc 32, 40 thereby resisting rotation of the shaft 12. When being driven by the drive motor, the input and output components 42, 44 are forced apart thereby holding the shaft 12 in a position in which the brake surfaces do not engage the brake discs 32,40 disengaging the brake arrangement 26 and allowing drive to be transmitted to the shaft 12 and hence causing translation of the sleeve 10.

It will be appreciated that, apart from the shaft 12 being rotatable instead of the sleeve 10, and the shaft 12 being held against significant axial movement instead of the sleeve 10, the embodiment of Figure 7 functions in the same manner as that of Figure 1.

Ball screw actuators of the type described hereinbefore may be used in a wide range of applications. For example, where used on an aircraft, the actuator may be used to drive the flaps or other flight control surfaces between extended and retracted positions. An alternative application is in the movement of the components of a thrust reverser system between inoperative and operative positions. Further, the actuators may be used to drive doors or hatches or other displaceable components of the aircraft between open and closed conditions. The actuators may also be used in other, non aircraft applications.

It will be appreciated that the description hereinbefore is of examples of the invention and that a range of modifications or alterations may be made thereto within the scope of the invention.

## Claims

1. A screw actuator comprising a sleeve (10) encircling part of an actuator shaft (12), one of the sleeve (10) and the actuator shaft (12) being rotatable, a drive arrangement (24) for rotating the rotatable one of the sleeve and the actuator shaft (10, 12) and a friction brake arrangement (26) for applying a braking load to the said rotatable one of the sleeve and the shaft (10, 12) to resist rotation thereof, wherein the drive arrangement (24) is adapted to adjust the axial position of the said rotatable one of the sleeve and the actuator shaft (10, 12) to disengage the friction brake arrangement (26) when the said rotatable one of the sleeve and the actuator shaft (10, 12) is being rotated by the drive arrangement (24).

2. An actuator according to Claim 1, wherein the friction brake arrangement (26) comprises a first brake element (32) arranged to resist rotary movement of the said rotatable one of the sleeve and the actuator shaft (10, 12) when the said rotatable one of the sleeve and the actuator shaft (10, 12) occupies a first axial position, and a second brake element (40) arranged to resist rotary movement of the said rotatable one of the sleeve and the actuator shaft (10, 12) when the said rotatable one of the sleeve and the actuator shaft (10, 12) occupies a second axial position, the drive arrangement (24) being arranged to hold the said rotatable one of the sleeve and the actuator shaft (10, 12) in an intermediate axial position between the first and second axial positions when the said rotatable one of the sleeve and the actuator shaft (10, 12) is being rotated by the drive arrangement (24).

3. An actuator according to Claim 1 or Claim 2, wherein the drive arrangement includes an input component (42) engageable with a first abutment (30) associated with the said rotatable one of the sleeve and the actuator shaft (10, 12) an output component (44) arranged to be driven by the input component (42) and engageable with a second abutment (38) associated with the said rotatable one of the sleeve and the actuator shaft (10, 12), the axial positions of the input and output component (42, 44) being adjustable.

4. An actuator according to Claim 3, wherein the input and output components (42, 44) are urged apart to engage the first and second abutments (30, 38) and hold the said rotatable one of the sleeve and the actuator shaft (10,1 2) in its intermediate axial position.

5. An actuator according to Claim 3 or Claim 4, wherein the input and output components (42, 44) are provided with pockets (46) defining ramped surfaces (47), drive transmitting components (48) being located between the input and output components (42, 44) in the pockets (46) to transmit drive from the input component (42) to the output component (44) and to ride up the ramped surfaces (47) to urge the input and output components (42, 44) apart when such drive is being transmitted.

6. An actuator according to Claim 5, wherein the drive transmitting components (48) comprise balls (48).

7. An actuator according to Claim 3 or Claim 4, wherein the input and output components are provided with pockets (46), a series of levers (48) being associated with the pockets, each lever (48) having one end engaging in a pocket (46) of the input component (42) and another end engaging in a pocket (46) of the output component (44), the levers (48) forcing the input and output components (42, 44) axially apart in the event of relative angular movement occurring therebetween.
